(19) Europäisches Patentamt

European Patent Office

Office européen des brevets

(11) **EP 0 849 451 B1**

(12) **EUROPÄISCHE PATENTSCHRIFT**

(45) Veröffentlichungstag und Bekanntmachung des Hinweises auf die Patenterteilung:
**07.05.2003 Patentblatt 2003/19**

(51) Int Cl.$^7$: **F02C 3/28**, F02C 3/30, F23R 3/00

(21) Anmeldenummer: **97810916.3**

(22) Anmeldetag: **26.11.1997**

(54) **Verfahren zur Verbrennungsstabilisierung bei einem Gasturbinenkraftwerk**

Method to stabilize combustion in a gas turbine power station

Méthode de stabilisation de combustion dans installation à turbine à gaz

(84) Benannte Vertragsstaaten:
**DE FR GB IT**

(30) Priorität: **21.12.1996 DE 19654022**

(43) Veröffentlichungstag der Anmeldung:
**24.06.1998 Patentblatt 1998/26**

(73) Patentinhaber: **ALSTOM (Switzerland) Ltd
5401 Baden (CH)**

(72) Erfinder:
• **Döbbeling, Klaus, Dr.
5200 Windisch (CH)**
• **Griffin, Timothy, Dr.
5408 Ennetbaden (CH)**

(56) Entgegenhaltungen:
EP-A- 0 610 722        DE-A- 19 521 356
GB-A- 923 316          US-A- 3 765 167
US-A- 5 048 284

## Beschreibung

### Technisches Gebiet

Die Erfindung geht aus von einem Verfahren zum Betrieb einer Gasturbogruppe nach dem Oberbegriff des ersten Anspruches.

### Stand der Technik

Bei der Verbrennung von mageren Brennstoff-Luft-Gemischen werden diese nahe an ihrer mageren Löschgrenze verbrannt, um die Flammentemperatur möglichst tief zu halten. Dadurch können die Stickoxyd-Emissionen minimiert werden. Im Teillastbereich stellen sich jedoch grosse Probleme, da dort die Verbrennungstemperatur nicht einfach durch eine Reduktion der Brennstoffmenge gesenkt werden kann. Dies würde nämlich zu erhöhten CO-Emissionen, Flammeninstabilitäten und Flammenlöschung führen. Ueblichte Methoden um diesen Problemen zu begegnen sind ein Luftbypass, gestufte Brenner, die Eindüsung von Dampf oder der Gebrauch von Diffusions-Pilotbrennern. Dies führt jedoch wieder zu einer Erhöhung der Stickoxyd-Emissionen.

Aus US 5,048,284 ist ein Verfahren zum Betrieb einer Gasturbogruppe bekannt, bei dem über eine Teil-Luftleitung zugeführte verdichtete Luft mit über eine Teil-Brennstoffleitung zugeführtem Brennstoff vermischt wird, und in einen Reaktor mit einer Katalysatorbeschichtung eingeleitet wird, und wobei in den Reaktor das Brennstoff-Luft-Gemisch in ein Synthesegas umgewandelt wird. Das Synthesegas wird mit dem nichtsynthetisierten Brennstoff vermischt, und mit diesem zusammen einer Verbrennungszone zugeführt. Vorderhand vermag auch dieses Verfahren das eingangs beschriebene Problem nicht zu lösen.

### Darstellung der Erfindung

Der Erfindung liegt die Aufgabe zugrunde, bei einem Verfahren zum Betrieb einer Gasturbogruppe der eingangs genannten Art eine magere Verbrennung mit geringen Emissionen zu gewährleisten und zu jedem Betriebszeitpunkt eine stabile Flamme zu ermöglichen.

Erfindungsgemäss wird dies durch die Merkmale des ersten Anspruches erreicht.

Kern der Erfindung ist es also, dass über eine Teil-Luftleitung zugeführte verdichtete Luft mit über eine Teil-Brennstoffleitung zugeführtem Brennstoff vermischt wird und in einen Reaktor mit einer Katalysator-Beschichtung eingeleitet wird, dass im Reaktor das Brennstoff-Luft-Gemisch in ein Synthesegas, im wesentlichen bestehend aus Wasserstoff, Kohlenmonoxid, Restluft und Restbrennstoff, umgewandelt wird und dass dieses Synthesegas in die Zonen der Brennkammer eingedüst wird, wo die Flamme stabilisiert wird.

Die Vorteile der Erfindung sind unter anderem darin zu sehen, dass aufgrund der hohen Reaktivität von Wasserstoff die Flamme des mageren Vormischbrenners viel effizienter stabilisiert wird als durch eine übliche Pilotflamme, d.h. die Flamme bewegt sich nicht mehr periodisch und damit werden Druck-Pulsationen im Brenner vermieden. Die Wasserstoff-Pilotflamme resultiert in höheren lokalen Flammentemperaturen und durch ihren Effekt auf die OH-Konzentration werden die lokalen Reaktionsraten erhöht. Der insgesamt benötigte Brennstoff ist dabei viel geringer als bei herkömmlichen Diffusions-Pilotflammen. Durch den geringeren Brennstoffverbrauch der Flamme werden die Stickoxidemissionen reduziert, dies auch bei Teillastbetrieb der Gasturbinenanlage.

Die lokale und gezielt Eindüsung des Synthesegases führt zu einer gezielten und kontrollierbaren Verbrennung des Wasserstoffes. Würde das Synthesegas dem übrigen Brennstoff des Vormischbrenners zugeführt und mit diesem vermischt, entstünden Probleme aufgrund der hohen Reaktivität von Wasserstoff, d.h. die Mischzeit von Brennstoff und Luft müsste verkürzt werden und man müsste die Standardbrennstoffeindüsung ändern, um den Rückschlag der Flamme zu verhindern.

Weitere vorteilhafte Ausgestaltungen der Erfindung ergeben sich aus den Unteransprüchen.

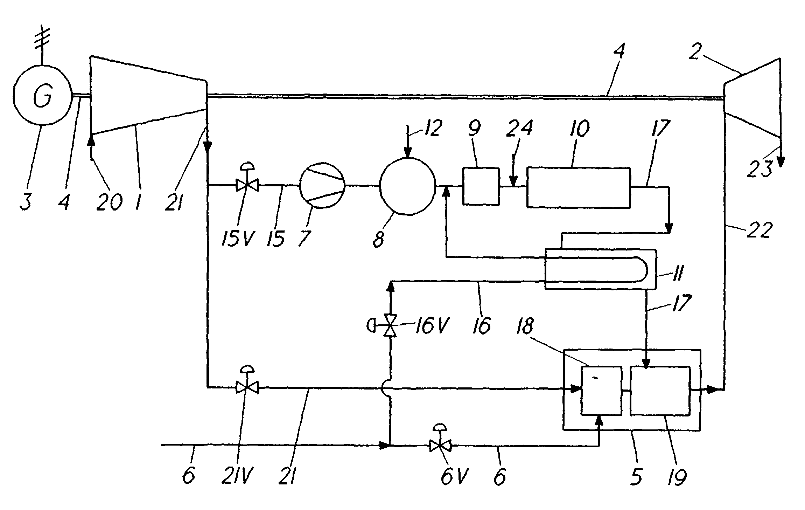

### Kurze Beschreibung der Zeichnung

In der einzigen Figur ist ein Ausführungsbeispiel der Erfindung schematisch dargestellt. Es sind nur die für das Verständnis der Erfindung wesentlichen Elemente gezeigt.

### Weg zur Ausführung der Erfindung

Ein gemeinsamer Wellenstrang 4 verbindet eine Gasturbine, im wesentlichen bestehend aus Verdichter 1, Brennkammer 5 und eigentlicher Turbine 2 und einem Generator 3. Der gemeinsame Wellenstrang 4 kann dabei aus Einzelwellen gebildet werden, die über nicht näher dargestellte Kupplungen verbunden sind.

Im Verdichter 1 wird die über einen Lufteinlass 20 angesaugte Luft komprimiert und die verdichtete Luft über eine Luft-Leitung 21 in die Brennkammer 5 geleitet. Ueber eine Brennstoffleitung 6 wird Brennstoff in die Brennkammer 5 eingeleitet. In der Brennkammer ist ein Vormischer 18 zur Vermischung von Brennstoff und verdichteter Luft angeordnet. Das so erhaltene Brennstoff-Luft-Gemisch wird in einem Brennraum 19 der Brennkammer 5 verbrannt. Das entstandene Heissgas wird über eine Heissgasleitung 22 in die Turbine 2 geleitet, wo es entspannt wird und ein Teil der Energie des Heissgases in Drehenergie umgewandelt wird. Die noch heissen Abgase werden über eine Abgasleitung 23 abgeführt.

Von der Luftleitung 21 wird ein Teil der verdichteten Luft über eine Teil-Luftleitung 15 abgeführt. Die abgezweigte Menge an verdichteter Luft kann über ein Ventil 15V in der Teil-Luftleitung 15 und über ein nach der Verzweigung in der Luft-Leitung 21 angeordnetes Ventil 21V eingestellt werden. Die über die Teil-Luftleitung 15 abgezweigte Luft wird in einem Zusatzverdichter 7 weiter verdichtet und kann in einer Vorheizung 8 unter Zuführung von Wärmeenergie 12 erhitzt werden. Danach wird die Luft in einen Mischer 9 eingeführt, wo die Luft mit einem Teil des Brennstoffes, insbesondere Erdgas oder Methan, vermischt wird. Dazu zweigt von der Brennstoffleitung 6 eine Teil-Brennstoffleitung 16 ab. Auch hier sind zur Einstellung der Menge des abgezweigten Brennstoffes nach der Verzweigung Ventile 16V und 6V in der Teil-Brennstoffleitung 16 und der Brennstoffleitung 6 angeordnet. Die Teil-Brennstoffleitung 16 führt über einen Wärmetauscher 11 ebenfalls in den Mischer 9.

Das Brennstoff-Luft-Gemisch mit einem Ueberschuss an Brennstoff ($\lambda < 1$) wird in einen Katalyse-Reaktor 10 geführt und dort teiloxidiert. Ein typischer Oxydationsvorgang für ein Methan-Luft-Gemisch ist dabei:

$$2CH_4 + O_2 \rightarrow 4H_2 + 2CO \qquad \Delta H = -35.6 \text{ kJ/mol } CH_4$$

Das so erhaltenen Wasserstoff-Kohlenmonoxid-Methan-Restluft-Gemisch, im folgenden Synthesegas genannt, wird über eine Katalysegasleitung 17 und über den Wärmetauscher 11, wo die Reaktionswärme des Synthesegases an den zuströmenden Brennstoff abgegeben wird, in die Brennkammer 5, insbesondere in den Brennraum 19 eingeleitet.

Der Reaktor 10 enthält zur Durchführung der Reaktion einen wabenförmigen Keramikkörper mit einer Beschichtung aus einem Edelmetall-Katalysator, z.B. basierend auf den Elementen Rh, Pt, Ru oder Ir. Der Keramikkörper der den Katalysator trägt kann auch aus anderen Stoffen gefertigt werden und kann beliebig verlaufende Kanäle aufweisen. Beispielsweise aus der US 5,149,464 ist ein Verfahren zur selektiven Oxidation von Methan zu Wasserstoff und Kohlenmonoxid bekannt. Das Methan-Luft-Gemisch wird dazu auf mindestens 600°C erwärmt und in Kontakt mit einem Katalysator aus der Legierung $M_xM'_yO_z$ gebracht, wobei M mindestens ein Element aus den Elementen Mg, B, Al, La, Ga, Si, Ti, Zr und Hf und M' ein Uebergangsmetall aus der d-Reihe ist.

Der Gleichgewichts-Umsatz von Methan wie auch die Produkt-Selektivität für CO und $H_2$ nimmt mit steigender Reaktionstemperatur zu, d.h. je höher die Temperatur liegt, desto mehr Methan wird umgewandelt und desto mehr CO und $H_2$ wird produziert. Die Reaktionstemperatur sollte zwischen 550 bis 850°C liegen, vorzugsweise zwischen 700 und 800°C.

Ein kleiner Reaktionsdruck von kleiner gleich 20 bar begünstigt die Umsatz-Selektivität für Wasserstoff. Weiter wird durch einen geringen Druck die Gefahr einer Explosion im Reaktor 10 reduziert. Andererseits wird Brennstoff mit hohem Druck, der mittels des Zusatzverdichters eingestellt werden kann, zur Einspritzung in die Brennkammer 5 benötigt, um eine genügende Eindringtiefe und Vermischung des Brennstoffes im Brenner zu gewährleisten.

Das stöchiometrische Verhältnis für die Reaktion liegt bei $\lambda = 0.5$. Ein kleineres $\lambda$-Verhältnis ist eventuell bei höheren Reaktionsdrücken wünschenswert, um die Gefahr einer Explosion zu reduzieren, da dadurch Rest-Sauerstoff verhindert wird, und die Reaktions-Selektivität zu verbessern. Ein höheres Methan/Luft-Verhältnis reduziert die Reaktions-Temperatur durch die zusätzliche Verdünnung der Produkte.

Die Durchflussgeschwindigkeit durch den Reaktor muss so gewählt werden, dass eine möglichst hohe Ausbeute erzielt werden kann. Die Selektivität zur Bildung der Reaktionszwischenprodukte CO und $H_2$, d.h. die Verhinderung der weiteren Reaktion mit dem Rest-$O_2$ der Luft zu $CO_2$ und $H_2O$, kann durch eine Erhöhung der Durchflussgeschwindigkeit durch den Katalysator des Reaktors 10 verbessert werden. Es ist deshalb vorteilhaft, mit höchstmöglichen Durchflussgeschwindigkeiten die einen nahezu vollständigen Umsatz gewährleisten zu arbeiten, so dass die Aufenthaltszeit im Innern des Katalysators bei höchstens einer 1 ms liegt. Es ist auch vorteilhaft mit Katalysatoren zu arbeiten, die ein möglichst schmales Verweilzeitspektrum aufweisen.

Das erhaltene Synthesegas wird in die Regionen des Vormischers eingespritzt, wo die Flamme stabilisiert wird. Aus der DE 43 04 213 ist beispielsweise ein Vormischbrenner, der als Vormischer 18 dient, bekannt, der aus zwei Teilkegelschalen besteht, die gegeneinander verschoben sind. Am stromabwärtigen Ende des Brenners, am Uebergang zum Brennraum ist eine Reihe Düsen angeordnet, über die das Gasgemisch eingedüst werden kann. Da die Flamme bei diesem Brenner im wesentlichen durch einen Querschnittssprung am stromabwärtigen Ende des Brenners stabilisiert wird, können die Eindüsungsöffnungen auch an der Frontplatte, im wesentlichen umfangsförmig um den Austritt des Brenners angeordnet sein. Wesentlich zur Ausführung der Erfindung ist jedoch nicht die Ausführung des Vormischer, sondern dass die Eindüsungsöffnungen für das hochreaktive Synthesegas dort angeordnet sind, wo die Flamme stabilisiert werden soll. Die durch das Synthesegas gebildete Flamme oder Flammen bilden dabei eine Zone stabiler Verbrennung und zudem eine Zündquelle für den Brenner, d.h. sie dienen als Pilotflammen.

Zum Starten der Synthesegas-Reaktion muss der Reaktor 10 auf über 500°C vorgewärmt werden. Dies kann entweder durch Vorwärmen der verdichteten Luft mittels der Vorheizung 8 oder durch direkte Heizung des Katalysators im Reaktor 10 erreicht werden, wobei dann die Vorheizung 8 nicht mehr benötigt wird. Die direkte Heizung des Katalysators, elektrisch durch Anlegen eines Stromes an das Metall des Katalysators oder an einen metallischen Wabenkörper oder chemisch, beispielsweise durch eine $H_2$-Oxidation mittels zusätzlicher Wasserstoffeindüsung 24 und Vermischung stromaufwärts des Katalysators, benötigt dabei viel weniger Energie. Wenn die exotherme Reaktion gestartet ist, sollte sie ohne Zugabe weiterer Energie ablaufen. Weiter kann die Reaktionswärme des Synthesegases über den Wärmetauscher 11 an den zuströmenden Brennstoff abgegeben werden.

Selbstverständlich ist die Erfindung nicht auf das gezeigte und beschriebene Ausführungsbeispiel beschränkt. Die Synthesegasproduktion kann zentral oder lokal erfolgen, wobei eine zentrale Produktion wirtschaftlicher ist. Die Teil-Luftleitung 15 und die Teil-Brennstoffleitung 16 müssen nicht von der Luftleitung 21 und der Brennstoffleitung 6 abzweigen, sie können auch seperat gespeist werden.

Das Synthesegas kann auch mittels Dampf-Reformierung gewonnen werden.

$$CH_4 + H_2O \rightarrow CO + 3H_2 \qquad \Delta H = 206 \text{ kJ/mol}$$

$$CO + H_2O \rightarrow CO_2 + H_2 \qquad \Delta H = -41.2 \text{ kJ/mol}$$

Der Dampf-Reformierungsprozess kann dabei auch autothermisch betrieben werden.

**Bezugszeichenliste**

| | |
|---|---|
| 1 | Verdichter |
| 2 | Turbine |
| 3 | Generator |
| 4 | Welle |
| 5 | Brennkammer |
| 6 | Brennstoffleitung |
| 6V | Ventil in 6 |
| 7 | Zusatzverdichter |
| 8 | Vorheizung |
| 9 | Mischer |
| 10 | Reaktor |
| 11 | Wärmetauscher |
| 12 | Wärmeenergie |
| 15 | Teil-Luftleitung zu 10 |
| 15V | Ventil in 15 |
| 16 | Teil-Brennstoffleitung zu 10 |
| 16V | Ventil in 16 |
| 17 | Katalysegas-Leitung |
| 18 | Vormischer |
| 19 | Brennraum |
| 20 | Lufteinlass |
| 21 | Luft-Leitung |
| 21V | Ventil in 21 |
| 22 | Heissgasleitung |
| 23 | Abgasleitung |
| 24 | Wasserstoffeindüsung |

**Patentansprüche**

1. Verfahren zum Betrieb einer Gasturbogruppe, wobei die Gasturbogruppe im wesentlichen aus einem Verdichter (1), einer Brennkammer (5), einer Turbine (2) und einem Generator (3) besteht, wobei in einem Vormischer (18) der Brennkammer (5) vorgängig der Verbrennung Brennstoff mit im Verdichter (1) verdichteter Luft vermischt und danach in einem Brennraum (19) verbrannt wird, und wobei über eine Teil-Luftleitung (15)zugeführte verdichtete Luft mit über eine Teil-Brennstoffleitung (16) zugeführtem Brennstoff vermischt wird und in einen Reaktor (10) mit einer Katalysator-Beschichtung eingeleitet wird, dass im Reaktor (10) das Brennstoff-Luft-Gemisch in ein Synthesegas, umfassend Wasserstoff, Kohlenmonoxid, Restluft und Restbrennstoff, umgewandelt wird, **dadurch gekennzeichnet, dass** dieses Synthesegas in die Zonen der Brennkammer (5) eingedüst wird, wo die Flamme stabilisiert wird.

2. Verfahren nach Anspruch 1,
   **dadurch gekennzeichnet,**
   **dass** der über eine Teil-Brennstoffleitung (16) zugeführte Brennstoff Erdgas und / oder Methan ist.

3. Verfahren nach Anspruch 1,
   **dadurch gekennzeichnet,**
   **dass** die Teil-Luftleitung (15) von einer Luftleitung (21) abzweigt, die die verdichtete Luft aus dem Verdichter (1) in die Brennkammer (5) leitet und / oder dass die Teil-Brennstoffleitung (16) von einer Brennstoffleitung (6) abzweigt, die Brennstoff der Brennkammer (5) zuführt.

4. Verfahren nach Anspruch 1,
   **dadurch gekennzeichnet,**
   **dass** der dem Reaktor (10) zugeführte Brennstoff vor der Vermischung mit der verdichteten Luft in einem Wärmetauscher (11) vorgewärmt wird.

5. Verfahren nach Anspruch 4,
   **dadurch gekennzeichnet,**
   **dass** die Wärmeenergie des Synthesegases zur Erwärmung des Brennstoffes im Wärmetauscher (11) verwendet wird.

6. Verfahren nach Anspruch 1,
   **dadurch gekennzeichnet,**
   **dass** beim Starten der Synthesegas-Produktion die verdichtete Luft vorgängig der Einleitung in den Reaktor (10) erwärmt wird und / oder dass der Katalysator erwärmt wird.

7. Verfahren nach Anspruch 6,
   **dadurch gekennzeichnet,**
   **dass** der Katalysator elektrisch und / oder chemisch erwärmt wird.

8. Verfahren nach Anspruch 1 oder 3,
   **dadurch gekennzeichnet,**
   **dass** die über die Teil-Luftleitung (15) dem Reaktor (10) zugeführte verdichtete Luft mit einem Zusatzverdichter (7) verdichtet wird.

9. Verfahren nach Anspruch 1,
   **dadurch gekennzeichnet,**
   **dass** das Synthesegas in den Brennraum (19) der Brennkammer (5) eingedüst wird.

**Claims**

1. Method for operating a gas turbine group, the gas turbine group essentially consisting of a compressor (1), a combustion chamber (5), a turbine (2) and a generator (3), fuel being mixed in a premixer (18) of the combustion chamber (5), prior to the combustion, with air compressed in the compressor (1), and subsequently being burned in a combustion space (19), and compressed air, fed via an air line element (15), being mixed with fuel fed via a fuel line element (16) and delivered to a reactor (10) having a catalytic coating, that [sic] the air/fuel mixture is

## EP 0 849 451 B1

converted in the reactor (10) into a synthesis gas comprising hydrogen, carbon monoxide, residual air and residual fuel, **characterized in that** this synthesis gas is injected into the zones of the combustion chamber (5) where the flame is stabilized.

2. Method according to Claim 1, **characterized in that** the fuel fed via a fuel line element (16) is natural gas and/or methane.

3. Method according to Claim 1, **characterized in that** the air line element (15) branches off from an air line (21) which delivers the compressed air from the compressor (1) to the combustion chamber (5) and/or **in that** the fuel line element (16) branches off from a fuel line (6) which feeds the fuel to the combustion chamber (5).

4. Method according to Claim 1, **characterized in that** the fuel fed to the reactor (10) is preheated in a heat exchanger (11) before being mixed with the compressed air.

5. Method according to Claim 4, **characterized in that** the heat energy of the synthesis gas is used to heat the fuel in the heat exchanger (11).

6. Method according to Claim 1, **characterized in that**, when the synthesis gas production is started, the compressed air is heated prior to being delivered to the reactor (10) and/or **in that** the catalyst is heated.

7. Method according to Claim 6, **characterized in that** the catalyst is heated electrically and/or chemically.

8. Method according to Claim 1 or 3, **characterized in that** the compressed air fed to the reactor (10) via the air line element (15) is compressed using an auxiliary compressor (7).

9. Method according to Claim 1, **characterized in that** the synthesis gas is injected into the combustion space (19) of the combustion chamber (5).


## Revendications

1. Procédé d'exploitation d'un groupe de turbine à gaz, dans lequel le groupe de turbine à gaz est essentiellement constitué d'un compresseur (1), d'une chambre de combustion (5), d'une turbine (2) et d'un générateur (3), du combustible étant mélangé avant la combustion avec de l'air comprimé dans le compresseur (1), dans un prémélangeur (18) de la chambre de combustion (5), et étant ensuite brûlé dans un espace de combustion (19), l'air comprimé apporté par un conduit d'air partiel (15) étant mélangé avec du combustible apporté par un conduit de combustible partiel (16) et étant introduit dans un réacteur (10) doté d'un revêtement de catalyseur, le mélange de combustible et d'air étant converti dans le réacteur (10) en un gaz de synthèse qui contient de l'hydrogène, du monoxyde de carbone, de l'air résiduel et du combustible résiduel, **caractérisé en ce que** ce gaz de synthèse est injecté dans les zones de la chambre de combustion (5) où la flamme sera stabilisée.

2. Procédé selon la revendication 1, **caractérisé en ce que** le combustible apporté par un conduit de combustible partiel (16) est du gaz naturel et/ou du méthane.

3. Procédé selon la revendication 1, **caractérisé en ce que** le conduit d'air partiel (15) est raccordé à un conduit d'air (21) qui amène l'air comprimé depuis le compresseur (1) jusque dans la chambre de combustion (5) et/ou **en ce que** le conduit de combustible partiel (16) est raccordé à un conduit de combustible (6) qui amène du combustible dans la chambre de combustion (5).

4. Procédé selon la revendication 1, **caractérisé en ce que** le combustible apporté dans le réacteur (10) est préchauffé dans un échangeur de chaleur (11) avant le mélange avec l'air comprimé.

5. Procédé selon la revendication 4, **caractérisé en ce que** l'énergie thermique du gaz de synthèse est utilisée pour le chauffage du combustible dans l'échangeur de chaleur (11).

6. Procédé selon la revendication 1, **caractérisé en ce que** lors du démarrage de la production de gaz de synthèse, l'air comprimé est réchauffé avant son introduction dans le réacteur (10) et/ou **en ce que** le catalyseur est chauffé.

7. Procédé selon la revendication 6, **caractérisé en ce que** le catalyseur est chauffé par des moyens électriques et/ou chimiques.

8. Procédé selon la revendication 1 ou 3, **caractérisé en ce que** l'air comprimé apporté dans le réacteur (10) par le conduit d'air partiel (15) est comprimé avec un compresseur supplémentaire (7).

9. Procédé selon la revendication 1, **caractérisé en ce que** le gaz de synthèse est injecté dans l'espace de combustion (19) de la chambre de combustion (5).

G

3  4  20  1  21

15V  15  7  8  12  9  24  10  17  4  2  23

22

11

17

16V  16  18

6  21V  21  6V  6  5  19

EP 0 849 451 B1